(19) Europäisches Patentamt
European Patent Office
Office européen des brevets

(11) **EP 3 291 432 B1**

(12) # EUROPÄISCHE PATENTSCHRIFT

(45) Veröffentlichungstag und Bekanntmachung des Hinweises auf die Patenterteilung:
**19.02.2020 Patentblatt 2020/08**

(51) Int Cl.:
*H02M 3/335* [(2006.01)]    *H02M 3/337* [(2006.01)]
*H02M 7/483* [(2007.01)]

(21) Anmeldenummer: **16187421.9**

(22) Anmeldetag: **06.09.2016**

(54) **DUAL-ACTIVE-BRIDGE MIT MODULAREN MEHRPUNKTBRÜCKEN**

DUAL-ACTIVE-BRIDGE WITH MODULAR MULTILEVEL BRIDGES

DUAL-ACTIVE-BRIDGE AVEC PONTS MODULAIRES MULTI-NIVEAUX

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**07.03.2018 Patentblatt 2018/10**

(73) Patentinhaber: **Siemens Aktiengesellschaft**
**80333 München (DE)**

(72) Erfinder:
• **Helsper, Martin**
**90584 Allersberg (DE)**
• **Hergt, Martin**
**90411 Nürnberg (DE)**
• **Lutze, Marcel**
**90459 Nürnberg (DE)**
• **Pfeifer, Markus**
**90455 Nürnberg (DE)**

(56) Entgegenhaltungen:
| | |
|---|---|
| **CN-A- 103 280 977** | **CN-A- 103 731 035** |
| **CN-A- 104 917 393** | **CN-B- 103 441 691** |
| **US-A1- 2016 072 375** | **US-A1- 2016 149 509** |

• **PENA-ALZOLA RAFAEL ET AL: "Review of modular power converters solutions for smart transformer in distribution system", 2013 IEEE ENERGY CONVERSION CONGRESS AND EXPOSITION, IEEE, 15. September 2013 (2013-09-15), Seiten 380-387, XP032516671, DOI: 10.1109/ECCE.2013.6646726 [gefunden am 2013-10-24]**
• **MARZ ANDREAS ET AL: "Requirements to change from IGBT to Full SiC modules in an on-board railway power supply", 2015 17TH EUROPEAN CONFERENCE ON POWER ELECTRONICS AND APPLICATIONS (EPE'15 ECCE-EUROPE), JOINTLY OWNED BY EPE ASSOCIATION AND IEEE PELS, 8. September 2015 (2015-09-08), Seiten 1-10, XP032800045, DOI: 10.1109/EPE.2015.7309088 [gefunden am 2015-10-27]**
• **BOSSHARD ROMAN ET AL: "Modeling and $\eta$ - $\alpha$ -Pareto Optimization of Inductive Power Transfer Coils for Electric Vehicles", IEEE JOURNAL OF EMERGING AND SELECTED TOPICS IN POWER ELECTRONICS, IEEE, PISCATAWAY, NJ, USA, Bd. 3, Nr. 1, 1. März 2015 (2015-03-01), Seiten 50-64, XP011571733, ISSN: 2168-6777, DOI: 10.1109/JESTPE.2014.2311302 [gefunden am 2015-01-29]**

**Beschreibung**

Die Erfindung betrifft einen Gleichspannungswandler, der eine Schaltungsanordnung mit einer ersten Umrichterschaltung und einer zweiten Umrichterschaltung mit jeweiligen durch eine Steuereinheit steuerbaren Halbleiterschaltern und einem zwischen der ersten und der zweiten Umrichterschaltung angeordneten Transformator umfasst.

Der Gleichspannungswandler, auch DC-DC-Wandler oder DC-DC-Konverter genannt, bezeichnet eine Schaltungsanordnung, die eine ihr an ihrem Eingang zugeführte erste Gleichspannung in eine an ihrem Ausgang anliegende zweite Gleichspannung mit höherem, niedrigerem oder invertiertem Spannungsniveau umwandelt. Die Umsetzung erfolgt mit Hilfe eines periodisch arbeitendem elektrischen Schalters und eines oder mehrerer Energiespeicher. Gleichspannungswandler zählen zu den selbstgeführten Stromrichtern. Im Bereich der elektrischen Energietechnik werden sie auch als Gleichstromsteller bezeichnet.

Gleichspannungswandler werden beispielsweise zur Reduzierung von Übertragungsverlusten in Industrienetzwerken, auf Schiffen oder in sog. Inselnetzen für Mittel- und Hochspannung eingesetzt. Zum Beispiel können mit Hilfe eines Gleichspannungswandlers Energieerzeugungseinheiten, wie z.B. Windenergieanlagen, Photovoltaikanlagen, Speichersysteme, Batterieladegeräte, usw., an ein Energieübertragungsnetzwerk angeschlossen werden. Ebenso ist die Anbindung von elektrischen Lasten, wie z.B. Antrieben, möglich.

Bei vielen Anwendungen ist es erforderlich, den Gleichspannungswandler kompakt und kostengünstig zu realisieren. Hierzu bietet sich eine als Dual Active Bridge (DAB) bezeichnete Gleichspannungstopologie mit zwei Brückenschaltungen und einem dazwischen angeordneten Transformator an. Durch eine DAB können Gleichspannungsnetze gleicher und auch unterschiedlicher Spannung verbunden werden. Eine galvanische Trennung wird durch den zwischen den zwei Brückenschaltungen angeordneten Transformator sichergestellt. Gegenüber konventionellen Gleichspannungswandlern weisen DABs den Vorteil größerer Kompaktheit und eines geringeren Preises auf. Dies ist beispielsweise bei der Verwendung im Offshore-Bereich vorteilhaft, um beispielsweise Windenergieanlagen über einen Gleichrichter direkt über den Gleichspannungswandler an ein Übertragungsnetzwerk anzubinden.

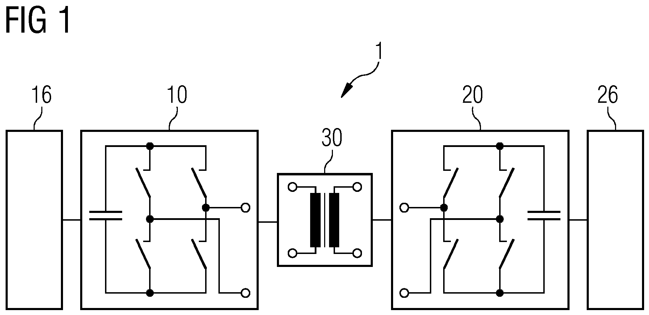

In Fig. 1 ist eine schematische Darstellung eines Gleichspannungswandlers 1 in Form einer einphasigen Dual Active Bridge kurz einphasige DAB, dargestellt. Die DAB weist eine erste Brückenschaltung 10 auf, mit der eine erste Gleichspannung eines ersten Gleichspannungsnetzes 16 in eine Wechselspannung transformiert wird. Die durch die erste Brückenschaltung 10 erzeugte Wechselspannung wird durch einen Transformator 30 transformiert, der ein vorgegebenes Übersetzungsverhältnis 1:n aufweist. Die mittels des Transformators 30 generierte Wechselspannung wird mittels einer nachfolgenden zweiten Brückenschaltung 20 wieder in eine zweite Gleichspannung umgewandelt, welche einem zweiten Gleichspannungsnetz 26 zur Verfügung gestellt wird. Durch die DAB wird somit die an der Eingangsseite anliegende Gleichspannung in eine andere Gleichspannung auf der Ausgangsseite umgewandelt.

Die erste und die zweite Brückenschaltung 10, 20 auf beiden Seiten des Transformators 30 sind identisch aufgebaut. Jede Brückenschaltung 10 bzw. 20 weist vier Halbleiterschalter in Brückenschaltung auf. Jeder Halbleiterschalter umfasst z.B. einen IGBT oder MOSFET als Halbleiterschalter. Jedem der Halbleiterschalter ist eine nicht dargestellte Diode antiparallel geschaltet. Durch den Transformator 30 sind die beiden Brückenschaltungen 10, 20 und damit die beiden Seiten des Gleichspannungswandlers 1 galvanisch voneinander getrennt. Den Brückenschaltungen 10, 20 ist ein Glättungskondensator eingangs- bzw. ausgangsseitig parallel geschaltet.

Die galvanische Trennung führt zu Vorteilen bezüglich der Auslegung der DAB, zu einer höheren Güte der transformierten Gleichspannung und verhindert die Ausbreitung von Fehlern und Störungen, die in den an die Brückenschaltungen 10, 20 angeschlossenen Anlagen der Gleichspannungsnetze 16, 26 auftreten.

Bei der in Fig. 1 schematisch dargestellten DAB besteht das Problem, dass dessen Anwendung auf Spannungen bis 4 kV und Ströme bis 700 A begrenzt ist. Daher ist eine solche DAB nicht mittelspannungstauglich in dem für Mittelspannung üblichen Spannungsbereich zwischen 1 kV und 52 kV. Gleichzeitig ist es wünschenswert, den Bauraum der DAB weiter verkleinern zu können.

Die CN 103 731 035 A offenbart einen Gleichspannungswandler, der eine erste Umrichterschaltung und eine zweite Umrichterschaltung mit jeweiligen durch eine Steuereinheit steuerbaren Halbleiterschaltern und einen zwischen den Umrichterschaltungen angeordneten Transformator umfasst. Der Transformator ist an einem Mittelpunktsknoten zwischen einer in Serie verschalteten ersten Teilanzahl an oberen Submodulen und einer in Serie verschalteten zweiten Teilanzahl an unteren Submodulen an die erste Umrichterschaltung angeschlossen.

Die CN 104 917 393 A offenbart einen Gleichspannungswandler, der eine erste Umrichterschaltung und eine zweite Umrichterschaltung mit jeweiligen durch eine Steuereinheit steuerbaren Halbleiterschaltern und einen zwischen den Umrichterschaltungen angeordneten Transformator umfasst. Der Transformator ist an die erste Umrichterschaltung angebunden, indem er an einem ersten Mittelpunktsknoten zwischen einer in Serie verschalteten ersten Teilanzahl an oberen Submodulen und einer in Serie verschalteten zweiten Teilanzahl an unteren Submodulen sowie an einem zweiten Mittelpunktsknoten zwischen einer in Serie verschalteten ersten Teilanzahl an oberen Submodulen und einer in Serie verschalteten zweiten Teilanzahl an unteren Submodulen verschaltet ist.

Die US 2016/072375 A1, die CN 103 280 977 A und die Publikation MARZ ANDREAS et al. "Requirements to change from IGBT to Full SiC modules in an on-board railway power supply", 2015 17th European Conference on Power Electronics and Applications (EPE'15 ECCE-Europe), jointly owned by EPE Association and IEEE PELS, 8. September 2015 offenbaren die Nutzung von Serienkondensatoren in DAB (Dual Active Bridge)-Schaltungen.

Es ist Aufgabe der Erfindung, einen Gleichspannungswandler derart weiterzubilden, dass dieser kompakter und kostengünstiger aufgebaut werden kann, wobei gleichzeitig ein Einsatz in Mittelspannungs- und Hochspannungslagen ermöglicht wird.

Diese Aufgabe wird gelöst durch einen Gleichspannungswandler gemäß den Merkmalen des Anspruches 1. Vorteilhafte Ausgestaltungen ergeben sich aus den abhängigen Patentansprüchen.

Zur Lösung dieser Aufgabe schlägt die Erfindung einen Gleichspannungswandler vor, der eine Schaltungsanordnung mit einer ersten Umrichterschaltung und einer zweiten Umrichterschaltung mit jeweiligen durch eine Steuereinheit steuerbaren Halbleiterschaltern und einem zwischen der ersten und der zweiten Umrichterschaltung angeordneten Transformator umfasst. Die erste und die zweite Umrichterschaltung sind jeweils als modularer Multilevel-Spannungsumrichter (auch als Modularer Multilevel-Konverter, MMC, bekannt) ausgebildet, die jeweils zumindest zwei, in Reihe verschaltete Submodule mit jeweiligen Halbleiterschaltern und mit einer Submodul-Kapazität umfassen. Die Steuereinheit ist dazu ausgebildet, die Halbleiterschalter der Submodule der ersten und der zweiten Brückenschaltung derart anzusteuern, dass dem Transformator ein Signal in der Form einer nachgebildeten Sinuskurve zugeführt wird, die über eine Treppenfunktion approximiert ist. Der Transformator umfasst eine erste Wicklung, eine zweite Wicklung sowie eine Kapazität, wobei die Kapazität in Serie zu der ersten und der zweiten Wicklung geschaltet ist. Die erste Brückenschaltung ist über einen ersten Wechselspannungsausgang, der mit einem Knotenpunkt der zwei Halbbrücken und des Submodul-Kondensators des ersten Submoduls verbunden ist, und einen zweiten Wechselspannungsausgang, der mit einem Knotenpunkt der beiden Halbbrücken und der Submodul-Kapazität des n-ten Submoduls der ersten Brückenschaltung verbunden ist, mit dem Transformator verbunden.

Der Erfindung liegt die Erkenntnis zu Grunde, dass bei einer herkömmlichen DAB aufgrund der Streuinduktivität des zwischen den zwei Brückenschaltungen angeordneten Transformators die Arbeitsfrequenz der Brückenschaltungen nach oben hin begrenzt ist. Die Erhöhung der Arbeitsfrequenz ermöglicht es jedoch, die einzelnen Komponenten der Brückenschaltungen so zu optimieren, dass die Baugröße und die Kosten der Komponenten minimiert werden können.

Die Erhöhung der Arbeitsfrequenz wird durch die Nutzung des aus dem Stand der Technik prinzipiell bekannten modularen Multilevel-Spannungsumrichters ermöglicht. Die an einer Umrichterschaltung anliegende Gleichspannung verteilt sich dabei linear über die einzelnen Submodule des betreffenden modularen Multilevel-Spannungsumrichters. Die Submodule können unter Steuerung der Steuereinheit die einzelnen an ihnen anliegenden Teilspannungen positiv oder negativ zu- oder abschalten. Dadurch lassen sich unterschiedlichste Spannungsformen erzeugen. Erfindungsgemäß wird für den Transformator die Spannung durch die eingangsseitige Umrichterschaltung in Form einer Sinuskurve über den eingangsseitigen modularen Multilevel-Spannungsumrichter nachgebildet, wobei die Sinuskurve über eine Treppenfunktion approximiert wird. Als Folge davon ist das Ausgangssignal des modularen Multilevel-Spannungsumrichters, d.h. der Umrichterschaltung, schmalbandig. Dadurch kann eine Ansteuerung der Halbleiterschalter mit im Vergleich höheren Frequenzen erfolgen, als dies bei den Halbleiterschaltern der Umrichterschaltung einer DAB der Fall ist. Der am Ausgang des modularen Multilevel-Spannungsumrichters angeschlossene Transformator kann dann aufgrund der hohen Frequenz im Volumen bei gleicher Leistungsübertragung entsprechend in der Baugröße reduziert werden.

Die Schmalbandigkeit des Eingangsspannungssignals des Transformators ermöglicht es, die Streuinduktivität des Transformators, die durch den inneren Aufbau des Transformators verursacht ist, bei der gewählten Arbeitsfrequenz gezielt zu kompensieren. Diese Kompensation erfolgt mit der in Serie zu der ersten oder der zweiten Wicklung geschalteten Kapazität. Durch diese Maßnahme kann eine deutliche Reduktion des Einflusses der Streuinduktivität und damit eine weitere Erhöhung der Grenzfrequenz des Transformators erzielt werden.

Darüber hinaus lassen sich durch das Vorsehen der Kapazität in Serie zu der ersten oder der zweiten Wicklung des Transformators Isolationsabstände und Wicklungstopologien im Design vorteilhaft beeinflussen, was zu einer weiter verbesserten Performanz oder zu einem kostenbewussten Design führt.

Im Ergebnis kann dadurch ein besonders ökonomischer Aufbau des Gleichspannungswandlers, aber auch des Transformators, erreicht werden.

Durch den am Ausgang des Transformators angeordneten modularen Multilevel-Spannungsumrichters, der die von dem Transformator bereitgestellte Wechselspannung gleichrichtet, kann eine Ausgangsgleichspannung, welche gleich, größer oder kleiner als die Eingangsgleichspannung ist, bereitgestellt werden. Darüber hinaus ermöglicht es das Vorsehen des ausgangsseitigen modularen Multilevel-Spannungsumrichters auch, den Energiefluss bidirektional zu schalten.

Die Steuereinheit ist dazu ausgebildet, die Halbleiterschalter der Submodule der ersten und/oder der zweiten Umrichterschaltung mit einer Frequenz von bis zu 400 kHz anzusteuern. Die Steuereinheit kann ferner dazu ausgebildet sein, die Halbleiterschalter der Submodule der ersten und/oder der zweiten Umrichterschaltung mit einer Frequenz von mehr als 5 kHz anzusteuern. Demgegenüber ist die konventionelle Schaltung einer DAB lediglich in der Lage, aufgrund der Streuinduktivität des zwischen den Umrichterschaltungen angeordneten Transformators eine Arbeitsfrequenz von höchstens 5 kHz zu nutzen.

Zweckmäßigerweise ist die Kapazität, die in Serie zu der ersten oder der zweiten Wicklung geschaltet ist, derart dimensioniert, dass sie die Streuinduktivität des Transformators kompensiert.

Um ein möglichst verlustarmes und schnelles Schalten der Halbleiterschaltelemente der Submodule des ersten oder zweiten modularen Multilevel-Spannungsumrichters ermöglichen zu können, ist es zweckmäßig, wenn die Halbleiterschalter der Submodule Silizium-Karbid (SiC)-Halbleiterschalter sind. Derartige Halbleiterschalter sind grundsätzlich in der Lage, mit Taktfrequenzen bis in den Megahertzbereich hinein betrieben zu werden.

Eine weitere zweckmäßige Ausgestaltung sieht vor, dass der Transformator zumindest zwei Submodule umfasst, die jeweils eine erste Wicklung und eine zweite Wicklung umfassen, wobei die ersten Wicklungen der zumindest zwei Submodule parallel verschaltet und die zweiten Wicklungen der zumindest zwei Submodule seriell verschaltet sind. Insbesondere ist jeder der zweiten Wicklungen der zumindest zwei Submodule eine Wicklungs-Kapazität parallel geschaltet. Dadurch kann die Wicklungs-Kapazität des Transformators verringert werden. Das Maß der Verringerung ergibt sich dadurch aus der Anzahl der Submodule des Transformators.

In einer weiteren Ausgestaltung kann die Kapazität, die in Serie zu der ersten oder der zweiten Wicklung des Transformators geschaltet ist, in Serie zu der Parallelschaltung der ersten Wicklungen der zumindest zwei Submodule geschaltet sein. Dies erfolgt bevorzugt auf der Seite des eingangsseitigen modularen Multilevel-Spannungsumrichters.

Alternativ kann die Kapazität durch Teilkapazitäten gebildet sein, wobei eine jeweilige Teilkapazität in Serie zu einer jeweiligen ersten Wicklung der zumindest zwei Submodule geschaltet ist.

Die Vorteile des erfindungsgemäßen Gleichspannungswandlers sind wie folgt: der Gleichspannungswandler kann kostengünstig bereitgestellt und kompakt aufgebaut werden. Insbesondere kann der Transformator mit geringen Abmaßen realisiert werden. Die kompakte Bauform ergibt sich durch eine hohe Taktfrequenz unter Nutzung von modularen Multilevel Spannungsumrichtern in Verbindung mit der kompensierten Streuinduktivität des Transformators. Gleichzeitig kann der Transformator durch die Kompensation der Streuinduktivität zu höheren Frequenzen hin genutzt werden. Eine Kompensation der Streuinduktivität des Transformators wird durch die Serienschaltung einer der Wicklungen des Transformators mit einer Kapazität bewerkstelligt. Durch die Serien-Parallelschaltung mehrerer Submodule eines Transformators kann die Streuinduktivität reduziert werden, ebenso wie die Wicklungskapazität des Transformators. Durch diese Maßnahme kann er in einem schmalbandigeren Frequenzbereich betrieben und kostengünstiger bereitgestellt werden. Durch die Verringerung der Wicklungs-Kapazität kann das Übersetzungsverhältnis oder die Frequenz des Transformators erhöht werden.

Der Gleichspannungswandler ist zwischen Ein- und Ausgang galvanisch voneinander getrennt. Darüber hinaus ermöglicht er einen bidirektionalen Energiefluss.

Eine Anwendung des Gleichspannungswandlers ist beispielsweise in Gleichspannungs-Inselnetzen für Mittel- und Hochspannung, d.h. in einem Spannungsbereich zwischen 1 kV bis 360 kV. Weitere Anwendungsgebiete sind Industrienetzwerke, im Umfeld von regenerativen Energieerzeugern (z.B. Photovoltaik oder Windkraft) oder Schiff. Der bevorzugte Frequenzbereich, in dem der Gleichspannungswandler bzw. dessen modulare Multilevel Spannungsumrichter betrieben werden, liegt in einem Bereich zwischen 5 kHz und 400 kHz.

Die Erfindung wird nachfolgend näher anhand von Ausführungsbeispielen in der Zeichnung erläutert. Es zeigen:

Fig. 1    eine schematische Darstellung eines aus dem Stand der Technik bekannten Gleichspannungswandlers in Gestalt einer einphasigen Dual Active Bridge;

Fig. 2    ein Schaltbild eines erfindungsgemäß ausgebildeten Gleichspannungswandlers mit modularen Multilevel-Spannungsumrichtern;

Fig. 3    ein Schaltbild einer weiteren Ausgestaltungsvariante eines erfindungsgemäßen Gleichspannungswandlers mit einem aus Submodulen bestehenden Transformator; und

Fig. 4    ein schematisches Schaltbild mit einem dem Transformator zugeordneten Serienschwingkreis zur Kompensation dessen Streuinduktivität.

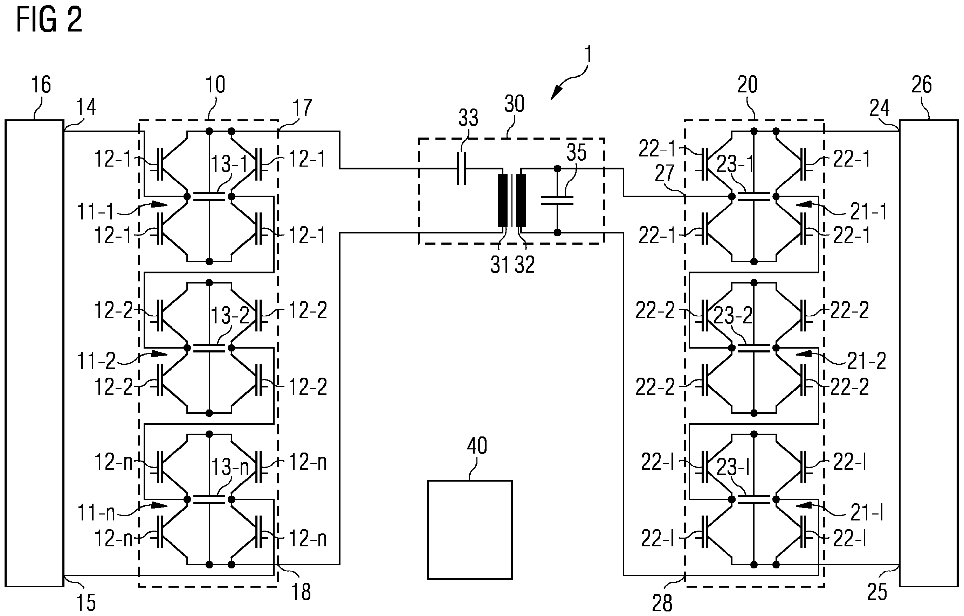

Fig. 2 zeigt ein erstes Ausführungsbeispiel eines erfindungsgemäßen Gleichspannungswandlers 1. Der Gleichspannungswandler 1 umfasst eine Schaltungsanordnung mit einer ersten Umrichterschaltung 10, einer zweiten Umrichterschaltung 20 sowie einem zwischen der ersten und der zweiten Umrichterschaltung 10, 20 angeordneten Transformator. Die erste Umrichterschaltung 10 ist eingangsseitig über einen ersten Versorgungspotentialanschluss 14 und einen ersten Bezugspotentialanschluss 15 mit einem ersten Gleichspannungsnetz 16 verbunden. Die an das erste Gleichspannungsnetz 16 angeschlossenen Komponenten können beispielsweise Energieerzeuger, wie z.B. Windkraftanlagen, Photovoltaik-Module und dergleichen, sein. Es können auch andere Energieerzeuger, wie z.B. Generatoren und dergleichen, an das erste Gleichspannungsnetz 16 angeschlossen sein. Zwischen dem ersten Versorgungspotentialanschluss 14 und dem ersten Bezugspotentialanschluss 15 liegt eine erste Gleichspannung $U_1$ des ersten Gleichspannungsnetzes 16 an.

Die zweite Umrichterschaltung 20 ist ausgangsseitig über einen zweiten Versorgungspotentialanschluss 24 und einen zweiten Bezugspotentialanschluss 25 mit einem zweiten Gleichspannungsnetz 26 verbunden. Zwischen dem zweiten Versorgungspotentialanschluss 24 und dem zweiten Bezugspotentialanschluss 25 liegt eine zweite Spannung $U_2$ des zweiten Gleichspannungsnetzes 26 an.

Die erste Umrichterschaltung, ebenso wie die zweite Umrichterschaltung 20, sind als modulare Multilevel-Spannungsumrichter (MMC) ausgebildet. In einer dem Fachmann bekannten Weise umfasst der modulare Multilevel-Spannungsumrichter der ersten bzw. zweiten Umrichterschaltung 10 bzw. 20 eine Anzahl von n bzw. eine Anzahl von l in Reihe verschalteten Submodulen 11-1, ..., 11-n bzw. 21-1, ..., 21-l. Ein jeweiliges Submodul weist vier Halbleiterschalter 12-1, ..., 12-n bzw. 22-1, ..., 22-l und eine Submodul-Kapazität 13-1, ..., 13-n bzw. 23-1, ..., 23-l auf. Jedem der Halbleiterschalter 11-1, ..., 11-n bzw. 21-1, ..., 21-l ist eine nicht dargestellte Diode antiparallel geschaltet. Die Anzahl n der Submodule 11-1, ..., 11-n kann der Anzahl l der Submodule 21-1, ..., 21-l entsprechen, d.h. n = l, oder unterschiedlich sein.

Jedes der Submodule 11-1, ..., 11-n bzw. 21-1, ..., 21-l umfasst vier Halbleiterschalter, von denen jeweils zwei zu einer Halbbrücke verschaltet sind. Die beiden Halbbrücken eines jeweiligen Submoduls sind der Submodul-Kapazität 13-1, ..., 13-n; 23-1, ..., 23-l parallel geschaltet.

Die Reihenschaltung der Submodule 11-1, ..., 11-n der ersten Umrichterschaltung 10 erfolgt derart, dass der erste Versorgungspotentialanschluss 14 mit dem Knotenpunkt zwischen den Halbleiterschaltern 12-1 der einen Halbbrücke des ersten Submoduls 11-1 verschaltet ist. Der Knotenpunkt der Halbleiterschalter 12-1 der anderen Halbbrücke ist mit dem Eingang des nächsten Submoduls 11-2 verschaltet. Den Eingang des zweiten Submoduls 11-2 bildet der Knotenpunkt zwischen den in Serie verschalteten Halbleiterschaltern 12-2 der einen Halbbrücke. Ausgangsseitig ist der Knotenpunkt der Halbleiterschalter 12-2 der anderen Halbbrücke mit dem Eingang des nächsten Submoduls verschaltet, usw. Das letzte Submodul 11-n ist ausgangsseitig mit dem ersten Bezugspotentialanschluss 15 verschaltet.

Die erste Umrichterschaltung 10 ist über einen ersten Wechselspannungsausgang 17 und einen zweiten Wechselspannungsausgang 18 mit dem Transformator 30 verbunden. Der erste Wechselspannungsausgang 17 ist dabei mit einem Knotenpunkt der zwei Halbbrücken und des Submodul-Kondensators 13-1 des ersten Submoduls 11-1 verbunden. Der zweite Wechselspannungsausgang 18 ist mit einem Knotenpunkt der beiden Halbbrücken und der Submodul-Kapazität 13-n des n-ten Submoduls 11-n der ersten Umrichterschaltung 10 verbunden.

Der Aufbau der zweiten Umrichterschaltung 20 entspricht dem Aufbau der ersten Umrichterschaltung 10. Der Ausgang des ersten Submoduls 21-1 ist mit dem Eingang des zweiten Submoduls 21-2 verbunden. Der Ausgang des zweiten Submoduls 21-2 ist mit dem Eingang des nächsten Submoduls verbunden. Das l-te Submodul 21-l ist ausgangsseitig mit einem zweiten Wechselspannungseingang 28 verbunden. Ein erster Wechselspannungseingang 27 ist mit dem Eingang des ersten Submoduls 21-1 der zweiten Umrichterschaltung 20 verbunden. Der erste und der zweite Wechselspannungseingang 27, 28 sind mit der Sekundärseite des Transformators 30 verbunden. Ein Knotenpunkt der beiden Halbbrücken und der Submodul-Kapazität 23-1 des ersten Submoduls 21-1 ist mit dem zweiten Versorgungspotentialanschluss 24 verbunden. Ein Knotenpunkt des l-ten Submoduls 21-l, der die Verbindung zwischen den Halbbrücken und der Submodul-Kapazität 23-l des Submoduls 21-l darstellt, ist mit dem zweiten Bezugspotentialanschluss 25 verbunden. Wie beschrieben, ist das zweite Gleichspannungsnetz 26 an den zweiten Versorgungspotentialanschluss 24 und den zweiten Bezugspotentialanschluss 25 angeschlossen.

Der Transformator 30 umfasst eine Primärwicklung 31 und eine Sekundärwicklung 32. Mit dem Bezugszeichen 35 ist eine, der Sekundärwicklung 32 parallelgeschaltete, Wicklungs-Kapazität des Transformators 30 gekennzeichnet. Eine Streuinduktivität ist in Fig. 2 nicht dargestellt. Das Bezugszeichen 33 kennzeichnet eine Kapazität zur Kompensation der nicht dargestellten Streuinduktivität.

Eine Steuerung der Halbleiterschalter 12-1, ..., 12-n; 22-1, ..., 22-l erfolgt mit Hilfe einer schematisch dargestellten Steuereinheit 40.

In der folgenden Beschreibung wird davon ausgegangen, dass die erste Umrichterschaltung 10 eine Eingangsseite und die zweite Umrichterschaltung 20 eine Ausgangsseite des Gleichspannungswandlers 1 darstellt. Dies bedeutet, die erste Gleichspannung $U_1$ des ersten Gleichspannungsnetzes 16 wird in die zweite Gleichspannung $U_2$ des zweiten Gleichspannungsnetzes 26 gewandelt, wobei die zweite Spannung $U_2$ kleiner, größer oder gleich der ersten Spannung $U_1$ sein kann. Unter dieser Voraussetzung ist es lediglich erforderlich, mit Hilfe der Steuereinheit 40 die Halbleiterschalter 12-1, ..., 12-n der als modularer Multilevel-Spannungsumricher ausgebildeten ersten Umrichterschaltung 10 anzusteuern, wohingegen die Halbleiterschalter 22-1, ..., 22-l der zweiten Umrichterschaltung 20 sperrend geschaltet werden, da eine Gleichrichtung über die den Halbleiterschaltern 22-1, ..., 22-n antiparallel geschalteten Dioden vorgenommen wird.

Die Submodule 11-1, ..., 11-n sind in Reihe zwischen dem ersten Versorgungspotentialanschluss 14 und dem ersten Bezugspotentialanschluss 15 verschaltet, über denen die Spannung $U_1$ anliegt. Die Gleichspannung $U_1$ verteilt sich dabei linear über die einzelnen Submodule 11-1, ..., 11-n. Dies bedeutet, über jedem Submodul fällt eine Spannung $U_{11\text{-}j, j = 1 \text{ bis } n} = U_1/n$. Die Submodule 11-1, ..., 11-n können die einzelnen Teilspannungen $U_1/n$ positiv oder negativ zu- oder abschalten. Bedingt durch diese Eigenschaft lassen sich unterschiedliche Spannungsformen erzeugen. Für den Transformator 30 wird die Spannung in Form einer Sinuskurve über eine geeignete Ansteuerung der Submodule 11-1, ..., 11-n des modularen Multilevel-Spannungsumrichters nachgebildet. Die Sinuskurve wird dabei über eine Treppenfunktion approximiert, wobei die Approximation umso besser ist, je größer die Anzahl von n ist. Dies bedeutet, je höher die Anzahl n der Submodule der ersten Umrichterschaltung 10 sind, desto geringer ist der Quantisierungsfehler.

Das an den Ausgängen 17, 18 anliegende Wechselspannungssignal ist aufgrund des sinusförmigen Eingangssignals schmalbandig. Bedingt durch die Art der Halbleiterschalter 12-1, ..., 12-n in den Submodulen 11-1, ..., 11-n können Frequenzen zwischen mehr als 5 kHz bis zu 400 kHz erreicht werden. Vorzugsweise werden als Halbleiterschalter 11-1, ..., 11-n bzw. 21-1, ..., 21-l Silizium-Karbid-Halbleiterschalter verwendet (SiC-Halbleiterschalter).

Der an den Ausgangsanschlüssen 17, 18 der ersten Umrichterschaltung angeschlossene Transformator kann aufgrund der hohen Frequenz im Volumen bei gleicher Leistungsübertragung entsprechend in der Baugröße reduziert werden. Die Schmalbandigkeit des Eingangssignals, mit dem der Transformator 30 beaufschlagt wird, ermöglicht es, dessen Streuinduktivität, die durch den internen Aufbau der Wicklungen 31, 32 des Transformators 30 verursacht ist, bei seiner Arbeitsfrequenz durch die Kapazität 33 gezielt zu kompensieren. Obwohl die Kapazität 33 im vorliegenden Ausführungsbeispiel in Serie zu der Primärwicklung 31 des Transformators 30 dargestellt ist, könnte die Kompensation auch durch eine Reihenschaltung der Kapazität 33 zu der Sekundärwicklung 32 erfolgen. Die Position der Kapazität 33 ist abhängig vom Wicklungsverhältnis 1:n des Transformators 30. Durch diese Maßnahme kann eine deutliche Reduktion des Einflusses der Streuinduktivität und damit eine Erhöhung der Grenzfrequenz des Transformators 30 erzielt werden.

Im Ergebnis lässt sich der Transformator 30 bei wesentlich höheren Frequenzen f benutzen, d.h. 5 kHz < f < 400 kHz. Zudem können Isolationsabstände und Wicklungstopologien im Design beeinflusst werden, was zu einer besseren Performanz oder zu einem kostenbewussten Design genutzt werden kann. Es ist dadurch ein ökonomischer Aufbau des Gleichspannungswandlers, aber auch des Transformators 30 möglich.

Am Ausgang des Transformators 30 ist die zweite Umrichterschaltung 20 angeordnet, die, wie beschrieben, mit Hilfe der den Halbleiterschaltern 21-1, ..., 21-l antiparallel geschalteten Dioden die Wechselspannung gleichrichtet.

Werden die Umrichterschaltungen 10, 20 in umgekehrter Weise betrieben, d.h. erfolgt eine Ansteuerung der Halbleiterschalter 22-1, ..., 22-l, wohingegen die Halbleiterschalter 12-1, ..., 12-n der ersten Umrichterschaltung 10 sperrend geschaltet sind, so kann ein Energiefluss von dem zweiten Gleichspannungsnetz 26 in Richtung des ersten Gleichspannungsnetzes 16 erfolgen.

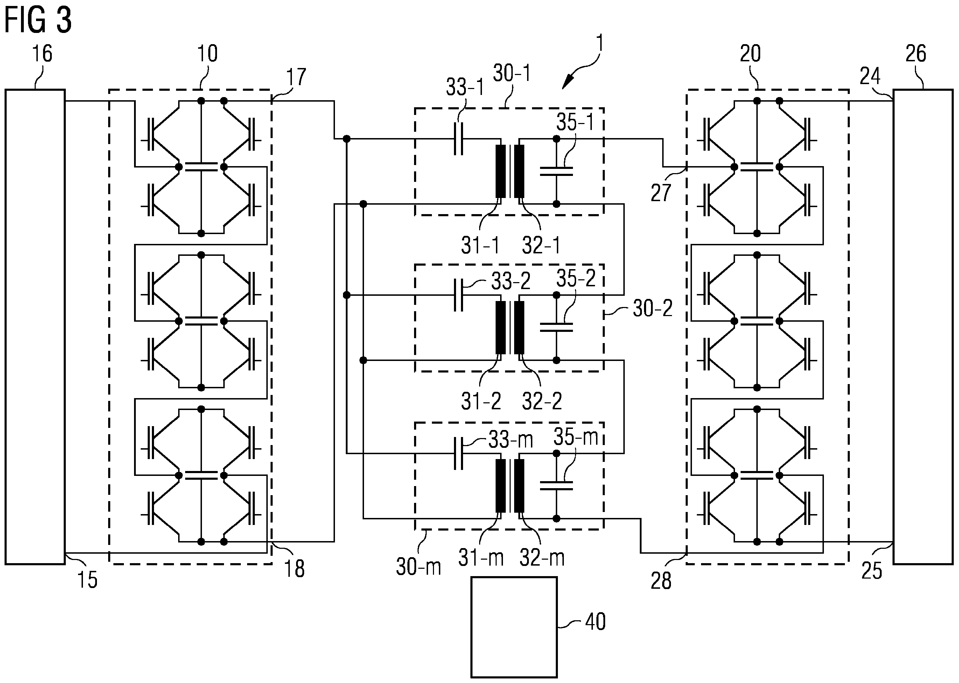

Fig. 3 zeigt ein zweites Ausführungsbeispiel, welches sich von dem in Fig. 2 gezeigten Ausführungsbeispiel im Hinblick auf die Ausführung des Transformators 30 unterscheidet. In diesem Ausführungsbeispiel wird davon ausgegangen, dass ein Leistungstransfer von dem ersten Gleichspannungsnetz 16 zu dem zweiten Gleichspannungsnetz 26 erfolgt.

Der Transformator 30 ist aus einer Anzahl m von Submodulen gebildet. Jedes Submodul 30-1, ..., 30-m umfasst jeweils eine erste oder Primärwicklung 31-1, ..., 31-m und eine zweite oder Sekundärwicklung 32-1, ..., 32-m. Die ersten Wicklungen 31-1, ..., 31-m der Submodule des Transformators 30 sind dabei parallel verschaltet. Die zweiten Wicklungen 32-1, ..., 32-m der Submodule 30-1, ..., 30-m des Transformators 30 sind demgegenüber seriell verschaltet. In dieser Ausgestaltung ist jeder der zweiten Wicklungen 32-1, ..., 32-m der Submodule 30-1, ..., 30-m des Transformators 30 eine Wicklungs-Kapazität 35-1, ..., 35-m parallel geschaltet. Zur Kompensation der Streuinduktivität des Transformators 30 ist die Kapazität 33 durch Teilkapazitäten 33-1, ..., 33-m gebildet, wobei eine jeweilige Teilkapazität 33-1, ..., 33-m in Serie zu einer jeweiligen ersten Wicklung 31-1, ..., 31-m der Submodule 30-1, ..., 30-m geschaltet ist.

Alternativ könnte die Kapazität zur Kompensation der Streuinduktivität des Kondensators 30 auch in Serie zu der Parallelschaltung der ersten Wicklungen 31-1, ..., 31-m der Submodule 30-1, ..., 30-m geschaltet sein.

Die Wicklungs-Kapazitäten 35-1, ..., 35-m des Transformators 30 ist über die Serien-Parallelschaltung der Submodule 30-1, ..., 30-m reduziert. Dabei verringert sich die Wicklungskapazität zu:

$$C_{w,gesamt} = C_W/m,$$

wobei m die Anzahl der Submodule und $C_W$ die Wicklungs-Kapazität der Submodul-Kapazitäten 35-1, ..., 35-m ist.

Durch die Parallelschaltung der Submodule 30-1, ..., 30-m wird die Streuinduktivität des Transformators 30 sehr klein, wodurch die Frequenz, mit der der Transformator 30 betrieben werden kann, weiter erhöht werden kann. Bei gleichzeitigem Vorsehen der Kapazität 33 bzw. der Teil-Kapazitäten 33-1, ..., 33-m zur Kompensation der Streuinduktivität kann die Frequenz weiter erhöht werden. Aufgrund der Verringerung der Streuinduktivität aufgrund der Serien-Parallelschaltung der Submodule 30-1, ..., 30-m des Transformators 30 kann die Kompensationskapazität sehr klein dimensioniert werden. Durch diese Beschaltung wird der Transformator 30 ideal, wodurch die Frequenz in die erwünschten hohen Frequenzbereiche verschoben werden kann, wodurch der für den Transformator 30 benötigte Bauraum reduziert werden kann. Dadurch kann insgesamt die Größe des Gleichspannungswandlers 1 reduziert werden.

Durch entsprechende, in Fig. 3 nicht dargestellte Schaltelemente an den Komponenten des Transformators kann darüber hinaus sichergestellt werden, dass auch bei einer Ausgestaltung der Kapazität in den Submodulen ein bidirektionaler Betrieb des Gleichspannungswandlers ermöglicht wird. Durch die Schaltelemente werden die parallel-geschalteten ersten Wicklungen 31-1, ..., 31-m mit der zweiten Umrichterschaltung 20 und die seriell verschalteten zweiten Wicklungen 32-1, ..., 32-m mit der ersten Umrichterschaltung 10 verbunden, wenn Energie von dem zweiten Gleichspannungsnetz 26 an das erste Gleichspannungsnetz 16 übertragen werden soll.

Alternativ können die in Verbindung mit den Submodulen des Transformators stehenden Komponenten doppelt und in umgekehrter Energieflussrichtung zwischen dem ersten und dem zweiten modularen Multilevel-Spannungsumrichter 10, 20 vorgesehen sein, wobei dann durch eine Umschaltung bestimmt wird, in welcher Richtung ein Energiefluss stattfindet.

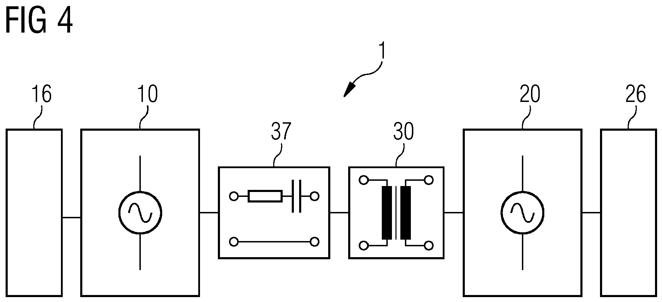

Fig. 4 zeigt in einer schematischen Darstellung die bereits beschriebene Topologie, wobei der Serienschwingkreis aus Kompensations-Kapazität 33 und Streuinduktivität 34 schematisch mit dem Bezugszeichen 37 gekennzeichnet ist. Bedingt durch den Serienschwingkreis und die Freiheitsgrade der beiden als idealisierte Wechselspannungsquellen dargestellten Umrichterschaltungen 10, 20 lassen sich je nach Wahl der reaktiven Bauelemente unterschiedliche Spannungen am Ein- und Ausgang des Gleichstromstellers einstellen. Dieses Steuerverfahren ist für rechteckförmige Spannungsquellen aus [1] dem Fachmann grundsätzlich bekannt.

Bezugszeichenliste

| 1 | Gleichspannungswandler |
| 10 | erste Brückenschaltung |
| 11-1,..., 11-n | Submodul der ersten Brückenschaltung 10 |
| 12-1,..., 12-n | Halbleiterschalter |
| 13-1, ..., 13-n | Submodul-Kapazität |
| 14 | erster Versorgungspotentialanschluss |
| 15 | erster Bezugspotentialanschluss |
| 16 | erstes Gleichspannungsnetz |
| 17 | erster Wechselspannungsausgang |
| 18 | zweiter Wechselspannungsausgang |
| $U_1$ | Spannung erstes DC-Netz |
| 20 | erste Brückenschaltung |
| 21-1,..., 21-1 | Submodul der zweiten Brückenschaltung 20 |
| 22-1,..., 22-1 | Halbleiterschalter |
| 23-1, ..., 23-1 | Submodul-Kapazität |
| 24 | zweiter Versorgungspotentialanschluss |
| 25 | zweiter Bezugspotentialanschluss |
| 26 | zweites Gleichspannungsnetz |
| 27 | erster Wechselspannungseingang |
| 28 | zweiter Wechselspannungseingang |
| $U_2$ | Spannung zweites DC-Netz |
| 30 | Transformator |
| 30-1, ..., 30-m | Submodul des Transformators 30 |
| 31 | Primärwicklung |
| 31-1,..., 31-m | Primärwicklung des Submoduls 30-1, ..., 30-m |
| 32 | Sekundärwicklung |
| 32-1,..., 32-m | Sekundärwicklung des Submoduls 30-1, ..., 30-m |
| 33 | Kapazität |
| 33-1, ..., 33-m | Teil-Kapazität |
| 34 | Streuinduktivität |
| 35 | Wicklungs-Kapazität |
| 35-1,..., 35-m | Wicklungs-Kapazität des Submoduls 30-1, ..., 30-m |
| 37 | Serienschwingkreis |
| 40 | Steuereinheit |

Patentansprüche

1. Gleichspannungswandler, umfassend eine Schaltungsanordnung mit einer ersten Umrichterschaltung (10) und einer zweiten Umrichterschaltung (20) mit jeweiligen durch eine Steuereinheit (40) steuerbaren Halbleiterschaltern und einem zwischen der ersten und der zweiten Umrichterschaltung (10, 20) angeordneten Transformator (30), wobei

- die erste und die zweite Umrichterschaltung (10, 20) jeweils als Modularer Multilevel Spannungsumrichter ausgebildet sind, die jeweils zumindest zwei, in Reihe verschaltete Submodule (11-1, ..., 11-n; 21-1, ..., 21-l) mit jeweiligen Halbleiterschaltern (12-1, ..., 12-n; 22-1, ..., 22-l) und mit einer Submodul-Kapazität (13-1, ..., 13-n; 23-1, ..., 23-l) umfassen;
- die Steuereinheit (40) dazu ausgebildet ist, die Halbleiterschalter (12-1, ..., 12-n; 22-1, ..., 22-l) der Submodule (11-1, ..., 11-n; 21-1, ..., 21-l) der ersten oder der zweiten Umrichterschaltung (10, 20) derart anzusteuern, dass dem Transformator (30) ein Signal in der Form einer Sinuskurve zugeführt wird, die über eine Treppenfunktion approximiert ist;
**dadurch gekennzeichnet, dass**
- der Transformator (30) eine erste Wicklung (31), eine zweite Wicklung (32) sowie eine Kapazität (33) umfasst, wobei die Kapazität (33) in Serie zu der ersten oder der zweiten Wicklung geschaltet ist; und
- wobei die erste Umrichterschaltung (10) über einen ersten Wechselspannungsausgang (17), der mit einem Knotenpunkt zweier Halbbrücken und des Submodul-Kondensators (13-1) des ersten Submoduls (11-1) verbunden ist, und einen zweiten Wechselspannungsausgang (18), der mit einem Knotenpunkt zweier Halbbrücken und der Submodul-Kapazität (13-n) des n-ten Submoduls (11-n) der ersten Umrichterschaltung (10) verbunden ist, mit dem Transformator (30) verbunden ist.

2. Gleichspannungswandler nach Anspruch 1, **dadurch gekennzeichnet, dass** die Steuereinheit (40) dazu ausgebildet ist, die Halbleiterschalter (12-1, ..., 12-n; 22-1, ..., 22-l) der Submodule (11-1, ..., 11-n; 21-1, ..., 21-l) der ersten und/oder der zweiten Umrichterschaltung (10, 20) mit einer Frequenz von bis zu 400 kHz anzusteuern.

3. Gleichspannungswandler nach Anspruch 1 oder 2, **dadurch gekennzeichnet, dass** die Steuereinheit (40) dazu ausgebildet ist, die Halbleiterschalter (12-1, ..., 12-n; 22-1, ..., 22-l) der Submodule (11-1, ..., 11-n; 21-1, ..., 21-l) der ersten und/oder der zweiten Umrichterschaltung (10, 20) mit einer Frequenz mehr als 5 kHz anzusteuern.

4. Gleichspannungswandler nach einem der vorhergehenden Ansprüchen, **dadurch gekennzeichnet, dass** die Kapazität (33) derart dimensioniert ist, dass sie eine Streuinduktivität (34) des Transformators (30) kompensiert.

5. Gleichspannungswandler nach einem der vorhergehenden Ansprüchen, **dadurch gekennzeichnet, dass** die Halbleiterschalter (12-1, ..., 12-n; 22-1, ..., 22-l) der Submodule (11-1, ..., 11-n; 21-1, ..., 21-l) SiC-Halbleiterschalter sind.

6. Gleichspannungswandler nach einem der vorhergehenden Ansprüche, **dadurch gekennzeichnet, dass** der Transformator (30) zumindest zwei Submodule (30-1, ..., 30-m) umfasst, die jeweils eine erste Wicklung (31-1, ..., 31-m) und eine zweite Wicklung (32-1, ..., 32-m) umfassen, wobei die ersten Wicklungen (31-1, ..., 31-m) der zumindest zwei Submodule (30-1, ..., 30-m) parallel verschaltet und die zweiten Wicklungen (32-1, ..., 32-m) der zumindest zwei Submodule (30-1, ..., 30-m) seriell verschaltet sind.

7. Gleichspannungswandler nach Anspruch 6, **dadurch gekennzeichnet, dass** jeder zweiten Wicklung (32-1, ..., 32-m) der zumindest zwei Submodule (30-1, ..., 30-m) eine Wicklungs-Kapazität (35-1, ..., 35-m) parallel geschaltet ist.

8. Gleichspannungswandler nach Anspruch 6 oder 7, **dadurch gekennzeichnet, dass** die Kapazität (33) in Serie zu der Parallelschaltung der ersten Wicklungen (31-1, ..., 31-m) der zumindest zwei Submodule (30-1, ..., 30-m) geschaltet ist.

9. Gleichspannungswandler nach Anspruch 6 oder 7, **dadurch gekennzeichnet, dass** die Kapazität (33) durch Teilkapazitäten (33-1, ..., 33-m) gebildet ist, wobei eine jeweilige Teilkapazität (33-1, ..., 33-m) in Serie zu einer jeweiligen ersten Wicklung (31-1, ..., 31-m) der zumindest zwei Submodule (30-1, ..., 30-m) geschaltet ist.

**Claims**

1. DC/DC voltage converter, comprising a circuit arrangement having a first converter circuit (10) and a second converter circuit (20) having respective semiconductor switches, which can be controlled by a control unit (40), and a transformer (30), which is arranged between the first and the second converter circuit (10, 20), wherein

- the first and the second converter circuit (10, 20) are each designed as modular multilevel voltage converters, which each comprise at least two series-interconnected submodules (11-1, ..., 11-n; 21-1, ..., 21-1) having respective semiconductor switches (12-1, ..., 12-n; 22-1, ..., 22-1) and having a submodule capacitance (13-1, ..., 13-n; 23-1, ..., 23-1);
- the control unit (40) is designed to actuate the semiconductor switches (12-1, ..., 12-n; 22-1, ..., 22-1) of the submodules (11-1, ..., 11-n; 21-1, ..., 21-1) of the first or the second converter circuit (10, 20) in such a way that a signal in the form of a sinusoidal curve, which is approximated by means of a step function, is fed to the transformer (30);
**characterized in that**
- the transformer (30) comprises a first winding (31), a second winding (32) and a capacitance (33), wherein the capacitance (33) is connected in series with the first or the second winding; and
- wherein the first converter circuit (10) is connected to the transformer (30) by means of a first AC voltage output (17), which is connected to a node of two half-bridges and the submodule capacitor (13-1) of the first submodule (11-1), and a second AC voltage output (18), which is connected to a node of two half-bridges and the submodule capacitance (13-n) of the n-th submodule (11-n) of the first converter circuit (10).

2. DC/DC voltage converter according to Claim 1, **characterized in that** the control unit (40) is designed to actuate the semiconductor switches (12-1, ..., 12-n; 22-1, ..., 22-1) of the submodules (11-1, ..., 11-n; 21-1, ..., 21-1) of the first and/or the second converter circuit (10, 20) at a frequency of up to 400 kHz.

3. DC/DC voltage converter according to Claim 1 or 2, **characterized in that** the control unit (40) is designed to actuate the semiconductor switches (12-1, ..., 12-n; 22-1, ..., 22-1) of the submodules (11-1, ..., 11-n; 21-1, ..., 21-1) of the first and/or the second converter circuit (10, 20) at a frequency of more than 5 kHz.

4. DC/DC voltage converter according to one of the preceding claims, **characterized in that** the capacitance (33) is dimensioned in such a way that it compensates for a stray inductance (34) of the transformer (30).

5. DC/DC voltage converter according to one of the preceding claims, **characterized in that** the semiconductor switches (12-1, ..., 12-n; 22-1, ..., 22-1) of the submodules (11-1, ..., 11-n; 21-1, ..., 21-1) are SiC semiconductor switches.

6. DC/DC voltage converter according to one of the preceding claims, **characterized in that** the transformer (30) comprises at least two submodules (30-1, ..., 30-m), which each comprise a first winding (31-1, ..., 31-m) and a second winding (32-1, ..., 32-m), wherein the first windings (31-1, ..., 31-m) of the at least two submodules (30-1, ..., 30-m) are interconnected in parallel and the second windings (32-1, ..., 32-m) of the at least two submodules (30-1, ..., 30-m) are interconnected in series.

7. DC/DC voltage converter according to Claim 6, **characterized in that** a winding capacitance (35-1, ..., 35-m) is connected in parallel with each second winding (32-1, ..., 32-m) of the at least two submodules (30-1, ..., 30-m).

8. DC/DC voltage converter according to Claim 6 or 7, **characterized in that** the capacitance (33) is connected in series with the parallel circuit of the first windings (31-1, ..., 31-m) of the at least two submodules (30-1, ..., 30-m).

9. DC/DC voltage converter according to Claim 6 or 7, **characterized in that** the capacitance (33) is formed by capacitance elements (33-1, ..., 33-m), wherein a respective capacitance element (33-1, ..., 33-m) is connected in series with a respective first winding (31-1, ..., 31-m) of the at least two submodules (30-1, ..., 30-m).

## Revendications

1. Convertisseur de tension continue comprenant un circuit avec un premier circuit onduleur (10) et un deuxième circuit onduleur (20) avec des commutateurs à semi-conducteur respectifs commandables par une unité de commande (40) et un transformateur (30) agencé entre le premier et le deuxième circuit onduleur (10, 20),

- le premier et le deuxième circuit onduleur (10, 20) étant réalisés respectivement en tant qu'onduleur de tension modulaire multi-niveaux comprenant respectivement au moins deux sous-modules montés en série (11-1, ..., 11-n ; 21-1, ..., 21-l) avec des commutateurs à semi-conducteur respectifs (12-1, ..., 12-n ; 22-1, ..., 22- l) et avec une capacité de sous-module (13-1, ..., 13-n ; 23-1, ..., 23-l) ;
- l'unité de commande (40) étant réalisée pour commander les commutateurs à semi-conducteur (12-1, ..., 12-n ; 22-1, ..., 22- l) des sous-modules (11-1, ..., 11-n ; 21-1, ..., 21-l) du premier ou du deuxième circuit onduleur (10, 20) de manière telle qu'est amené au transformateur (30) un signal sous la forme d'une courbe sinusoïdale qui est approchée par une fonction en escalier,
**caractérisé en ce que**
le transformateur (30) comprend un premier enroulement (31), un deuxième enroulement (32) et une capacité (33), la capacité (33) étant montée en série avec le premier ou le deuxième enroulement et
le premier circuit onduleur (10) étant relié au transformateur (30) via une première sortie de tension alternative (17) reliée à l'intersection de deux demi-ponts et du condensateur de sous-module (13-1) du premier sous-module (11-1) et via une deuxième sortie de tension alternative (18) reliée à l'intersection de deux demi-ponts et de la capacité de sous-module (13-n) du nième sous-module (11-n) du premier circuit onduleur (10).

2. Convertisseur de tension continue selon la revendication 1, **caractérisé en ce que** l'unité de commande (40) est réalisée pour commander les commutateurs à semi-conducteur (12-1, ..., 12-n ; 22-1, ...,

22- l) des sous-modules (11-1, ..., 11-n ; 21-1, ..., 21- l) du premier et/ou du deuxième circuit onduleur (10, 20) avec une fréquence de jusqu'à 400 kHz.

3. Convertisseur de tension continue selon la revendication 1 ou 2, **caractérisé en ce que** l'unité de commande (40) est réalisée pour commander les commutateurs à semi-conducteur (12-1, ..., 12-n ; 22-1, ..., 22- l) des sous-modules (11-1, ..., 11-n ; 21-1, ..., 21- l) du premier et/ou du deuxième circuit onduleur (10, 20) avec une fréquence de plus de 5 kHz.

4. Convertisseur de tension continue selon l'une des revendications précédentes, **caractérisé en ce que** la capacité (33) est dimensionnée de manière à compenser une inductance de fuite (34) du transformateur (30).

5. Convertisseur de tension continue selon l'une des revendications précédentes, **caractérisé en ce que** les commutateurs à semi-conducteur (12-1, ..., 12-n ; 22-1, ..., 22-l) des sous-modules (11-1, ..., 11-n ; 21-1, ..., 21- l) sont des commutateurs à semi-conducteur SiC.

6. Convertisseur de tension continue selon l'une des revendications précédentes, **caractérisé en ce que** le transformateur (30) comprend au moins deux sous-modules (30-1, ..., 30-m) qui comprennent respectivement un premier enroulement (31-1, ..., 31-m) et un deuxième enroulement (32-1, ..., 32-m), les premiers enroulements (31-1, ..., 31-m) des au moins deux sous-modules (30-1, ..., 30-m) étant montés en parallèle et les deuxièmes enroulements (32-1, ..., 32-m) des au moins deux sous-modules (30-1, ..., 30-m) étant montés en série.

7. Convertisseur de tension continue selon la revendication 6, **caractérisé en ce qu'**une capacité d'enroulement (35-1, ..., 35-m) est montée en parallèle avec un enroulement sur deux (32-1, ..., 32-m) des au moins deux sous-modules (30-1, ..., 30-m) .

8. Convertisseur de tension continue selon la revendication 6 ou 7, **caractérisé en ce que** la capacité (33) est montée en série avec le montage en parallèle des premiers enroulements (31-1, ..., 31-m) des au moins deux sous-modules (30-1, ..., 30-m) .

9. Convertisseur de tension continue selon la revendication 6 ou 7, **caractérisé en ce que** la capacité (33) est formée par des capacités partielles (33-1, ..., 33-m), une capacité partielle respective (33-1, ..., 33-m) étant montée en série avec un premier enroulement respectif (31-1, ..., 31-m) des au moins deux sous-modules (30-1, ..., 30-m).

FIG 1

# FIG 2

FIG 3

FIG 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- CN 103731035 A
- CN 104917393 A
- US 2016072375 A1
- CN 103280977 A

**In der Beschreibung aufgeführte Nicht-Patentliteratur**

- Requirements to change from IGBT to Full SiC modules in an on-board railway power supply. **MARZ ANDREAS et al.** 2015 17th European Conference on Power Electronics and Applications (EPE'15 ECCE-Europe). EPE Association and IEEE PELS, 08. September 2015